# EUROPÄISCHE PATENTSCHRIFT

(11) **EP 1 196 886 B1**
(45) Veröffentlichungstag und Bekanntmachung des Hinweises auf die Patenterteilung: **10.03.2004**
(21) Anmeldenummer: 00941937.5
(22) Anmeldetag: 31.05.2000
(51) Int. Cl.: G06K 9/72, G06K 9/62

(54) **VERFAHREN ZUR BILDUNG UND/ODER AKTUALISIERUNG VON WÖRTERBÜCHERN ZUM AUTOMATISCHEN ADRESSLESEN**
METHOD FOR CREATING AND/OR UPDATING DICTIONARIES FOR AUTOMATICALLY READING ADDRESSES
PROCEDE POUR LA CONSTITUTION OU L'ACTUALISATION DE DICTIONNAIRES POUR LA LECTURE AUTOMATIQUE D'ADRESSES

(30) Priorität: 20.07.1999 DE 19933984
(43) Veröffentlichungstag der Anmeldung: 17.04.2002
(73) Patentinhaber: SIEMENS AKTIENGESELLSCHAFT, 80333 München (DE)
(72) Erfinder: BAYER, Thomas, D-78315 Radolfzell (DE)
(86) Internationale Anmeldenummer: PCT/DE2000/001791
(87) Internationale Veröffentlichungsnummer: WO 2001/006451

(56) Entgegenhaltungen:
- WO-A-95/15535
- US-A- 5 754 671
- JONATHAN J. HULL: "The Use of Global Context in Text Recognition" EIGTH INT. CONF. ON PATTERN RECOGNITION, 27. - 31. Oktober 1986, Seiten 1218-1220, XP002153998 Paris, FRance
- OKUDA T ET AL: "METHOD FOR THE CORRECTION OF GARBLED WORDS BASED ON THE LEVENSTEIN METRIC" IEEE TRANSACTIONS ON COMPUTERS,IEEE INC. NEW YORK,US, Bd. C-25, Nr. 2, 1976, Seiten 172-178, XP000916729 ISSN: 0018-9340

## Beschreibung

Die Erfindung betrifft ein Verfahren zur Bildung und/oder Aktualisierung von Wörterbüchern zum Adreßlesen.

Adreßlesesysteme benötigen Informationen über Inhalt und Syntax von Adressen, um die erforderlichen Informationen wie Stadt, Postleitzahl, Vorname und Nachname, etc. extrahieren zu können. Der zulässige Inhalt einzelner Adreßelemente wird mit einem Wörterbuch (Liste von zulässigen Zeichenketten) beschrieben, das nach dem Stand der Technik aus vorliegenden Informationsquellen aufgebaut wird, wie z.B. aus einem postalischen Wörterbuch oder aus einer Mitarbeiterliste einer Firma. Die Anwendungsdomäne ändert sich jedoch mit der Zeit, so daß das zu Beginn erstellte Wörterbuch nicht mehr alle vorkommenden Inhalte vollständig umfaßt. Vor allem bei der Anwendung eines Lesesystems zur innerbetrieblichen Postverteilung ist die Änderung des Wortvorrats beträchtlich: Mitarbeiter verlassen die Firma, neue Mitarbeiter kommen hinzu, Mitarbeiter wechseln die Abteilung oder Nachnamen ändern sich aufgrund von Heirat, etc. So fehlen im Wörterbuch Einträge und es gibt Einträge, die nicht mehr gültig sind. Je deutlicher der aktuell verwendete Wortvorrat vom Lexikon abweicht, desto mehr sinkt die Erkennungsleistung des Lesesystems.

Diese Änderungen mußten bisher in bestimmten Zeitabständen manuell in die Wörterbücher übertragen werden, so daß die geschilderten Nachteile auftraten.

Aufgabe der Erfindung ist es, ein Wörterbuch zum Adreßlesen automatisch zu bilden und/oder automatisch zu aktualisieren.

Erfindungsgemäß wird die Aufgabe durch die Merkmale des Anspruches 1 gelöst. Dabei wird von dem Gedanken ausgegangen, die Ergebnisse der aktuellen Leseprozesse zwischenzuspeichern, auszuwerten und zum automatischen Aufbau oder zur Aktualisierung eines Wörterbuches zu nutzen. Beim Zwischenspeichern erfolgt eine Kennzeichnung, ob die jeweilige Adresse erfolgreich gelesen wurde oder ob sie zurückgewiesen wurde. Soll ein Wörterbuch neu erstellt werden oder sollen in das vorhandene Wörterbuch neue Adressaten aufgenommen werden, so werden die zurückgewiesenen Leseergebnisse herangezogen.

Die Wörterbücher können einzelne Wörter, z.B. Nachnamen und/oder zusammenhängende Wortgruppen mit n Wörtern, z.B. Vor- und Nachnamen oder Vor- und Nachnamen und Straßennamen enthalten, wobei die Wörter sowohl direkt nebeneinander (Abstand m=0) liegen als auch durch m Wörter beabstandet sein können.

Durch die Bildung von Klassen von Wörtern oder Wörtergruppen, die ein festgelegtes Mindestähnlichkeitsmaß zueinander besitzen, und die Aufnahme mindestens des Repräsentanten in das oder die Wörterbücher der zugeordneten Adreßbereiche, ist ein automatischer Aufbau eines Wörterbuches bzw. eine automatische Aktualisierung des Wörterbuches infolge neuer Adressaten oder von Änderungen bei den Adressaten möglich.

Vorteilhafte Ausgestaltungen der Erfindung sind in den Unteransprüchen beschrieben.

Zur Klassenbildung ist es vorteilhaft, eine Liste aller Wörter/Wortgruppen der zurückgewiesenen Leseergebnisse zu erstellen, die nach der Häufigkeit der Wörter/Wortgruppen sortiert ist. Dann wird, beginnend mit dem häufigsten Wort/Wortgruppe, das Ähnlichkeitsmaß mit allen übrigen Wörtern/Wortgruppen bestimmt und in eine Ähnlichkeitsliste eingetragen. Alle Wörter/Wortgruppen in der Ähnlichkeitsliste mit einem Ähnlichkeitsmaß über einer festgelegten Schwelle werden anschließend dem aktuellen Wort/Wortgruppe als Klasse zugeordnet. Danach werden die Wörter/Wortgruppen der gebildeten Klasse aus der Häufigkeitsliste entfernt.

Die Repräsentanten der jeweiligen Klasse von Wörtern oder Wortgruppen der zwischengespeicherten und zurückgewiesenen Leseergebnisse können durch die kürzesten oder häufigsten Wörter oder Wortgruppen gebildet werden.

Zur Erkennung von Adressen im Wörterbuch, die geändert oder entfernt werden müssen, ist es vorteilhaft, die eindeutig gelesenen Adressen statistisch auszuwerten. Tritt eine plötzliche Änderung der Häufigkeit der Wörter und/oder Wortgruppen über eine bestimmte Schwelle hinaus auf und dauert sie eine festgelegte Zeit an, so werden diese Wörter/Wortgruppen aus dem Wörterbuch entfernt.

Um zu vermeiden, daß irrelevante Wörter der Leseergebnisse in das Wörterbuch aufgenommen werden, können diese durch Vergleich mit in einer speziellen Datei für irrelevante Wörter gespeicherten Wörtern ermittelt werden.

Vorteilhaft in diesem Zusammenhang ist es auch, kurze Wörter ohne Abkürzungspunkt mit weniger als p Buchstaben als irrelevant nicht ins Wörterbuch aufzunehmen. Um die Adreßinterpretation mit Hilfe der Wörterbücher möglichst detailliert durchzuführen, ist es vorteilhaft, neben den Repräsentanten auch die Wörter und/oder Wortgruppen der dazugehörenden Klassen mit den Ähnlichkeitsmaßen und Häufigkeiten aufzunehmen.

In einer weiteren vorteilhaften Ausgestaltung können zusammengehörende Wortgruppen mit n Wörtern, die untereinander einen Abstand von m Wörtern haben, ermittelt werden, indem ausgehend vom jeweiligen, für das Wörterbuch ermittelten Einzelwort die Adressen mit Fenstern der Breite von n+m Wörtern durchsucht werden. Nachdem die weiteren n-1 Einzelwörter mit den Abständen von m Wörtern untereinander ermittelt wurden, erfolgt die Aufnahme dieser Wortgruppe mit ihren Häufigkeiten in das entsprechende Wörterbuch.

Vorteilhaft ist es auch, das Ähnlichkeitsmaß mit dem Levenshtein-Verfahren (siehe "A Method for the Correction of Garbled Words, Based on the Levenshtein Metric", K. Okuda, E. Tanaka, T. Kasai, IEEE Transactions on Computers, Vol. c-25, No. 2, February 1976) zu ermitteln.

Es kann auch vorteilhaft sein, die ermittelten Wörterbuchaktualisierungen an einem Videocodierplatz zu kategorisieren und bestätigen zu lassen oder die Neueintragungen ins Wörterbuch zusätzlich vor ihrer Übernahme in die entsprechende Kategorie mit den Inhalten einer Datei zu vergleichen, in der charakteristische allgemeingültige Namen oder wenigstens Zeichenstrings bezogen auf die jeweilige Kategorie (Vorname, Nachname, Abteilung) gespeichert sind.

Anschließend wird die Erfindung in einem Ausführungsbeispiel anhand der Zeichnung näher erläutert. Ziel hierbei ist, bisher unbekannte Nachnamen (n=1) oder Paare unbekannter Vor- und Nachnamen (n=2) oder Nach- und/oder Vor- und Nachnamen und Abteilungsnamen von Mitarbeitern einer Firma und/oder entsprechende nicht mehr gültige Namen bzw. Namenskombinationen zu ermitteln und Wörterbuchänderungen durchzuführen.

Dabei zeigen
- FIG 1: eine Ablaufstruktur eines Monitorprozesses zur Überwachung und Steuerung der Aktualisierung des Wörterbuches
- FIG 2: eine Ablaufstruktur zur Ermittlung und Kennzeichnung irrelevanter Wörter
- FIG 3: eine Ablaufstruktur zur Ermittlung bisher unbekannter Einzelwörter (n=1) (Nachnamen)
- FIG 4: eine Ablaufstruktur zur Ermittlung bisher unbekannter Wortgruppen, ausgehend von den Einzelwörtern
- FIG 5: eine Ablaufstruktur zur Aktualisierung der Wörterbücher unter Berücksichtigung der Wortkategorien

Die Wortvorschläge werden aus den Erkennungsergebnissen automatisch generiert, die das Lesesystem im täglichen Betrieb für jedes Sendungsbild berechnet. Die Erkennungsergebnisse für jedes Sendungsbild umfassen unterschiedliche geometrische Objekte (Layoutobjekte), wie Textblöcke, Zeilen, Wörter und Zeichen, und deren Relationen untereinander, also, welche Zeilen zu welchem Textblock gehören, welche Wörter in welchen Zeilen liegen, etc. Für jedes Einzelzeichenbild erzeugt das Lesesystem eine Liste von möglichen Zeichenbedeutungen. Darüberhinaus berechnet das Lesesystem für jedes Layoutobjekt seine Lage im Sendungsbild und dessen geometrischen Ausmaße.
Zum Aktualisieren oder auch Lernen von Wörterbucheinträgen wird die Menge der bearbeiteten Sendungen in zwei Teilmengen getrennt, in die Menge der vom Lesesystem automatisch gelesenen (aber nicht notwendigerweise korrekt gelesenen) und die Menge der zurückgewiesenen Sendungen. Die Menge der automatisch gelesenen Sendungen dient zum Ermitteln von Wörterbucheinträgen, die nicht mehr gültig sind; aus der Menge der zurückgewiesenen Sendungen werden neue Wörterbucheinträge abgeleitet.

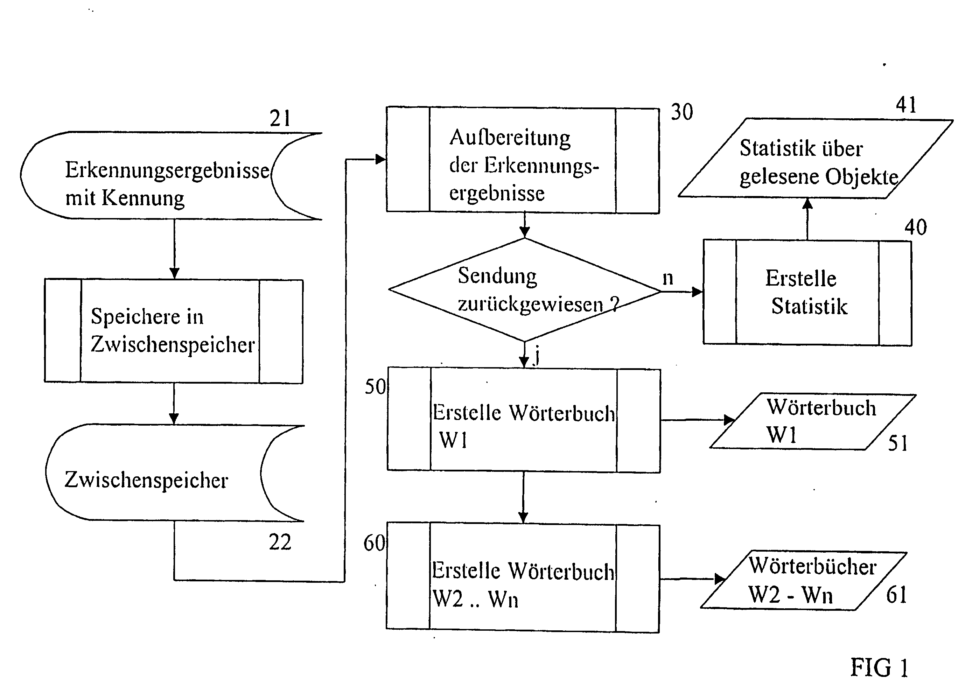

Das beispielhafte System besteht aus fünf Modulen: einen Monitorprozeß, einer Aufbereitung der Erkennungsergebnisse (Vorverarbeitung), zweier Wörterbuchgenerierungsverfahren und einem Vorschlagsadministrator.
Der Monitorprozeß gemäß FIG 1 überwacht und steuert das Wörterbuchlernen. Die Erkennungsergebnisse 21 für jedes Sendungsbild werden zusammen mit einer Kennung für "erfolgreich gelesen" oder "zurückgewiesen" vom Leser an den Monitor übergeben. Zusätzliche Informationen zur Sendungsart (Brief, Großbrief, Hauspostformular) und weitere Merkmale zu den einzelnen Objekten der Erkennungsergebnisse, wie ROI (Region of Interest), Zeilen- und Wort-Hypothesen, Zerlegungsalternativen und Schriftzeichen-Erkennungsergebnisse, können ebenfalls übergeben werden. Diese Erkennungsergebnisse werden im Monitor in einem Zwischenspeicher 22 gespeichert, bis eine genügend große Menge an Daten angefallen ist (z.B. nach 20.000 Sendungen oder nach einer Woche Betrieb).

Im einfachsten Fall wird lediglich die erste Alternative der Zeichenerkennungsergebnisse zusammen mit dem besten Segmentierpfad im Zwischenspeicher gespeichert. Beispielsweise könnte der Inhalt folgendermaßen aussehen:

| | |
|---|---|
| | |

| <Erkennungsergebnisse> | <Kennung> |
|---|---|
| :... | |
| 1017921 PMD 55 | erkannt |
| MR. A1FRED C SCHMIDI | |
| EXCCU1LVE DIRCC1OR, OPCRA1IONS | |
| DCVC1OPMENT | |
| MyComp, INC | |
| 1 MyStreet | |
| MyCity, 12345 | |
| | |
| PO11Y O/BRIEN | zurückgewiesen, nicht im Wörterbuch |
| | |
| MANAGER, COMMUNITY AFFAIRS | |
| MyComp INC | |
| 1 MyStreet | |
| MyCity, 12345 | |
| | |
| PO1LY OBRIEN | zurückgewiesen, nicht im Wörterbuch |
| | |
| MANAGER, COMMUNITY AFFAIRS | |
| MyComp, INC | |
| 1 MyStreet | |
| MyCity, 12345 | |
| | |
| MS ME1INDA DUCKSWORTH | erkannt |
| MyComp, INC | |
| MAI1 CODE 63-33 | |
| 1 MyStreet | |
| MyCity, 12345 | |
| **********AURO**MIXED AADC 460 | zurückgewiesen, nicht im Wörterbuch |
| | |
| MIK0 SCHWARTZ | |
| O AND T 26-OO | |
| 1 MyStreet | |
| MyCity, 12345 | |
| ..... | |

Liegen genügend Ergebnisse vor, werden die zurückgewiesenen Erkennungsergebnisse an eine Aufbereitungseinheit 30 übergeben und zu den beiden Teilprozessen zum Wörterbuchlernen für Einzelworte 50 und Wortgruppen 60 weitergeleitet. Im Falle einer erfolgreichen automatischen Erkennung werden die Ergebnisse an ein Statistikmodul übergeben 40. Wenn alle Sendungen verarbeitet worden sind, werden die Wort- und Wortgruppenlisten 41 des Statistikmoduls und der Wörterbuchlernprozesse 51, 61 gesammelt und mit einer geeigneten grafischen Oberfläche einer Bedienkraft zur Bestätigung vorgelegt.

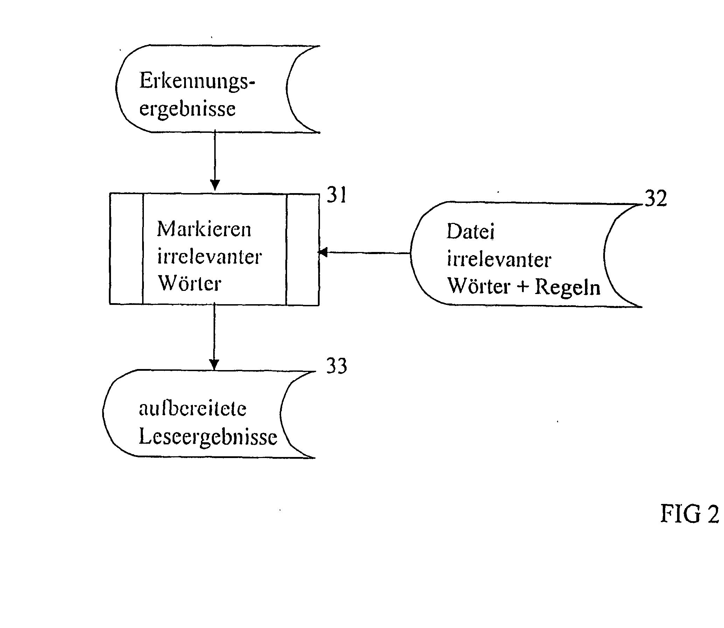

In der.Aufbereitungseinheit 30 werden irrelevante Wörter in den zurückgewiesenen Erkennungsergebnissen gekennzeichnet, die in der nachfolgenden Textanalyse nicht berücksichtigt werden (vgl. FIG 2). Diese Wörter werden als nicht relevant markiert aber nicht gelöscht, da die Wortnachbarschaft für den nachfolgenden Wörterbuchaufbau wichtig ist.

Im Verfahrensschritt Markieren irrelevanter Wörter 31, werden aus der Menge der Worthypothesen kurze Wörter markiert, beispielsweise diejenigen, die weniger als 4 Buchstaben lang sind und gleichzeitig keinen Abkürzungspunkt besitzen, und solche die zu weniger als 50% aus alphanumerischen Zeichen bestehen. Weiterhin werden solche Wörter markiert, die in einer speziellen Datei 32 enthalten sind, die für diese Anwendung häufige, aber irrelevante Wörter enthält. Bei der Anwendung der innerbetrieblichen Postverteilung können beispielsweise der Firmenname, Städtename, Straßenname, Postfachbezeichnung, etc., in diesem speziellen Lexikon enthalten sein. Die Ergebnisse der Aufbereitung werden in einen Zwischenspeicher 33 zurückgeschrieben.

Nach der Vorverarbeitung sehen die Ergebnisse folgendermaßen aus:

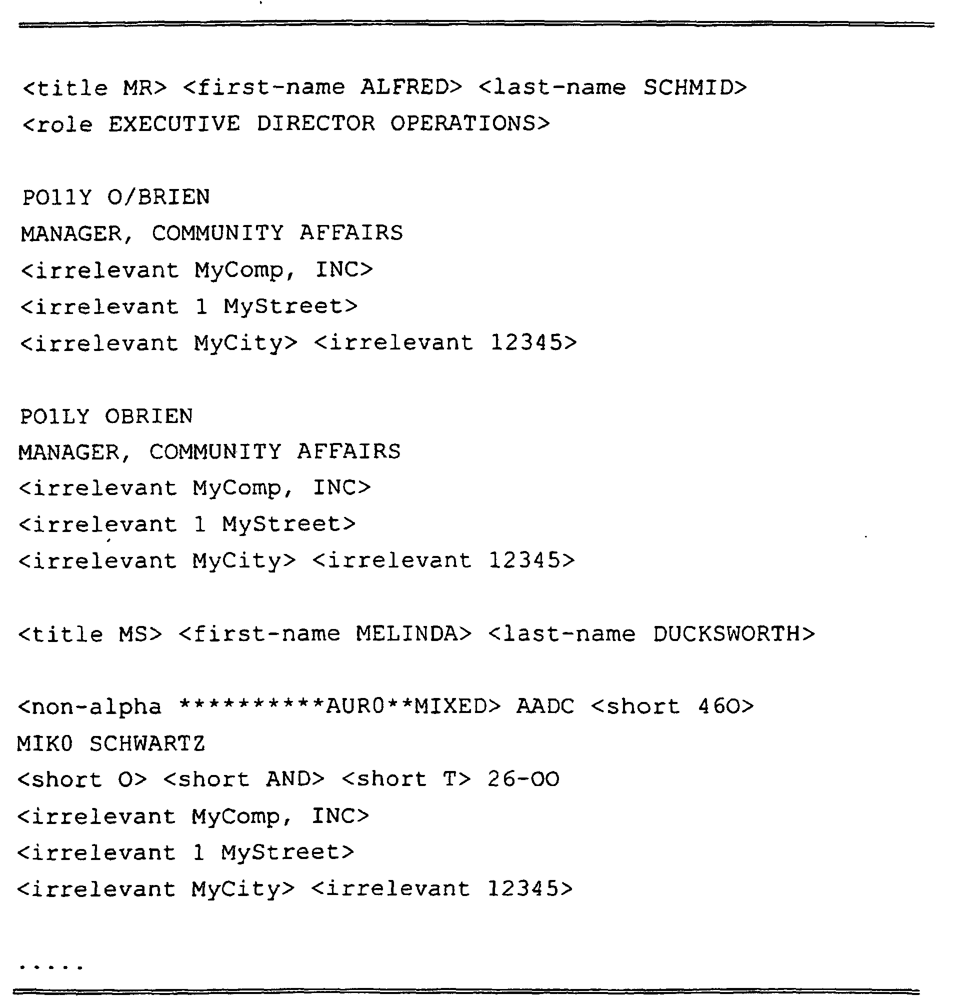

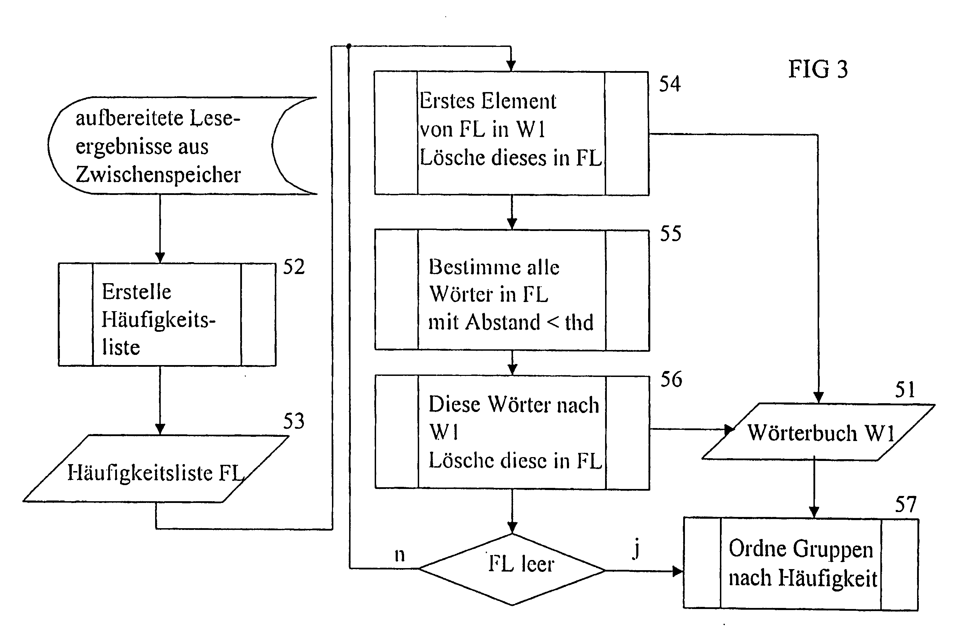

Aus den aufbereiteten zurückgewiesenen Erkennungsergebnissen wird gemäß FIG 3 im ersten Schritt 52 eine Häufigkeitsliste FL 53 aller darin vorkommender Wörter erstellt, nach absteigender Häufigkeit sortiert und in einen Zwischenspeicher abgelegt. Für obiges Beispiel könnte die Häufigkeitsliste FL 53 folgendermaßen aussehen:

| | |
|---|---|
| ... | |
| AFFAIRS | 37 |
| MANAGER | 37 |
| COMMUNITY | 37 |
| OBRIEN | 20 |
| O/BRIEN | 17 |
| SCHWARTZ | 15 |
| MIKO | 12 |
| POLLY | 10 |
| PO11Y | 8 |
| PAULA | 8 |
| PO1LY | 5 |
| MIKO | 3 |
| ..... | |

Aus dieser Liste wird schrittweise ein Wörterbuch W1 relevanter Wörter 51 aufgebaut. Zu jedem Wort in der Häufigkeitsliste FL 53 wird der Abstand d zu allen Wörtern in dieser Häufigkeitsliste bestimmt. Ein Verfahren zur Messung des Abstandes zwischen zwei Zeichenketten ist das Levenshtein-Verfahren, das den minimalen Abstand zweier Zeichenketten berechnet, bezogen auf 3 Kostenarten, auf Kosten einer Ersetzung eines Zeichens, einer Einfüge- und einer Löschoperation. Zur Berechnung von d können neben der Zeichenkette weitere Merkmale der Erkennungsergebnisse verwendet werden, beispielsweise die Zeichenalternativen, die Segmentieralternativen, etc.

Das erste Wort in der Häufigkeitsliste FL 53 (das aktuell häufigste) wird in das Wörterbuch W1 51 übernommen und aus der Häufigkeitsliste FL 53 gelöscht 54. Alle Wörter aus der Häufigkeitsliste FL 53 mit einem Abstand kleiner einer festgelegten Schwelle th_{d} werden dem aktuellen Wort im Wörterbuch W1 51 mit ihrer Häufigkeit zugeordnet 55, 56. Gleichzeitig werden diese Wörter in der Häufigkeitsliste FL 53 gelöscht. Die Iteration endet, wenn die Häufigkeitsliste FL 53 leer ist. Damit werden Wortklassen gebildet, die untereinander einen Abstand d nicht überschreiten, bzw. ein entsprechendes Ähnlichkeitsmaß nicht unterschreiten.

Wenn alle Wörter verarbeitet sind, besteht das Wörterbuch W1 51 aus einer Menge von Wortklassen. Das kürzeste Wort einer Wortklasse wird als Repräsentant der Gruppe bezeichnet. Jede Wortklasse enthält Wörter, die einander ähnlich sind, mit den dazugehörigen Häufigkeiten und Abständen zum Klassenrepräsentanten. Die Repräsentanten der Wortklassen im Wörterbuch W1 51, und damit auch die Wortklassen, werden nach absteigender Häufigkeit sortiert 57. Die Häufigkeit einer Wortklasse setzt sich aus der Häufigkeit des Repräsentanten und der Häufigkeiten der Elemente der Wortklasse zusammen. Wortklassen, deren Häufigkeit eine gewisse Schwelle unterschreiten, werden aus dem Wörterbuch W1 51 gelöscht. Aus obiger Liste wird folglich folgendes Wörterbuch W1 51 gebildet:

| <Wortklasse> | <Häufigkeit> | <Abstand> |
|---|---|---|
| ... | | |
| AFFAIRS | 37 | |
| MANAGER | 37 | |
| COMMUNITY | 37 | |
| OBRIEN | 37 | |
| O/BRIEN | 17 | (d = 1) |
| POLLY | 23 | |
| PO11Y | 8 | (d = 2) |
| PO1LY | 5 | (d = 1) |
| SCHWARTZ | 15 | |
| MIKO | 15 | |
| MIKO | 3 | (d = 1) |
| PAULA | 8 | |
| ... | | |

Die Bildung von Repräsentanten kann je nach Anwendung mit weiterem Wissen unterstützt werden. So kann ein Wort entweder auf eine Zahl oder auf eine Alpha-Folge abgebildet werden, indem OCR-Ersetzungstabellen verwendet werden, die austauschbare Zeichenpaare definieren, wie 1 - L, 0 - O, 2 - Z, 6 - G, etc. Wenn darüberhinaus zu erlernenden Wortklassen Alternativenmengen bekannt sind - für Vornamen beispielsweise Spitznamen, wie Paula-Polly, Thomas-Tom, etc., kann auch diese Ersetzung vorgenommen werden. Beide Schritte können auf das Wörterbuch W1 51 angewendet werden, was zu einer weiteren Verschmelzung von Wortklassen führt.

Abschließend werden in den Erkennungsergebnissen alle Wörter, die im Wörterbuch W1 51 vorkommen, markiert und durch ihren Repräsentanten ergänzt. Diese Wörter werden im folgenden mit W1-Wörter bezeichnet.

An der Spitze vom Wörterbuch W1 51 stehen nun die häufigsten, bisher unbekannten Wortformen und die Wortklassen enthalten Schreibvarianten davon. So werden in der Anwendung der innerbetrieblichen Postverteilung bisher unbekannte Nach- und Vornamen und Teile von Abteilungsbezeichnungen im Wörterbuch W1 51 stehen. Darüberhinaus enthalten deren Wortklassen Schreibvarianten oder Varianten, die aufgrund der Eigenschaften des Lesesystems entstanden sind.

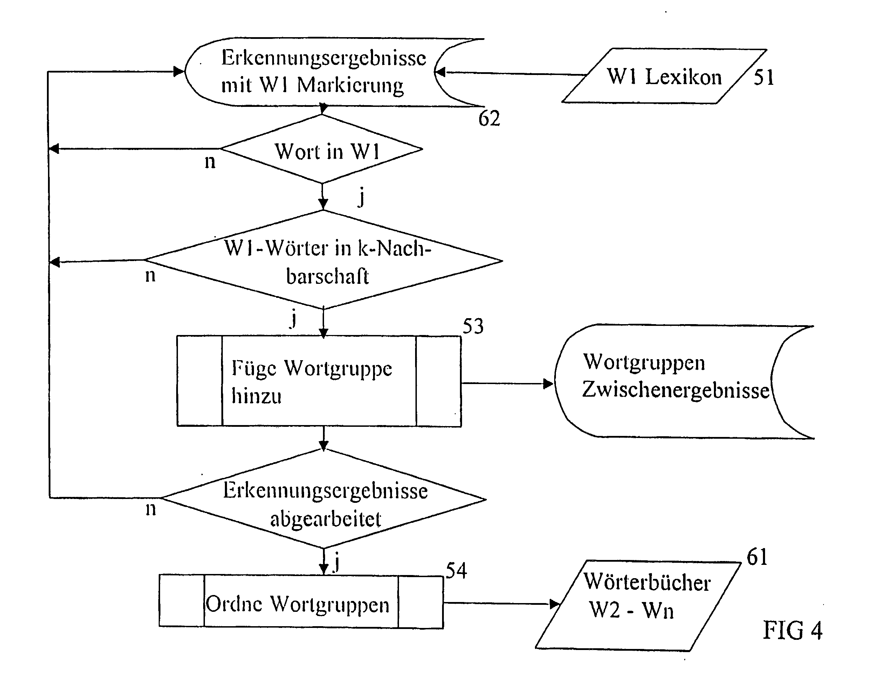

Ausgehend von den Repräsentanten der Wortklassen im Wörterbuch W1 51, die in den Erkennungsergebnissen als solche markiert sind, werden im nächsten Schritt nach FIG 4 Wortgruppen der Länge 2 bis n bestimmt, indem die Nachbarschaften von W1-Wörtern der Erkennungsergebnisse 62 untersucht werden. Für jedes W1-Wort wird dazu die rechte Nachbarschaft in einem Fenster der Breite k <= n durchsucht, ob darin weitere W1-Wörter sind. n-1 zunächst leere Wörterbücher werden in einem Zwischenspeicher angelegt und Schritt für Schritt gefüllt. Ein n-Tupel wird dann in einen Wortgruppen-Zwischenspeicher aufgenommen 53, wenn n W1-Wörter gefunden worden sind und weniger als m weitere nicht W1-Wörter zwischen diesen n liegen. Wie beim Wörterbuch W1 51, wird auch hier die Auftretenshäufigkeit der einzelnen Wortgruppen der Länge n gespeichert.

Der Wahl der Werte von m und n hängt von der konkreten Anwendung ab. Für Werte n > 4 sind bei der Anwendung Adreßlesen keine signifikant häufigen Einträge mehr zu erwarten. m = 0 bedeutet, daß alle n W1-Wörter direkt aufeinanderfolgen. Gerade bei Paaren von Vornamen und Nachnamen kann jedoch ein zweiter Vorname hin und wieder die direkte Aufeinanderfolge unterbrechen, genauso wie Segmentierfehler der Lesemaschine vermeintliche Worthypothesen erzeugen können und damit eine direkte Aufeinanderfolge verhindern. Für die beschriebene Anwendung sind folglich m=1 und n=3 geeignete Werte.
In diesem Schritt werden folglich aus dem Wortgruppen-Zwischenspeicher n-1 Wörterbücher Wn 61 generiert, die häufige Wortsequenzen mit ihren Häufigkeiten für Paare, Triplets, etc. bis zu n-Tupel enthalten. In jedem Wörterbüch Wn 61 werden die Häufigkeiten der n-Tupel mit den Häufigkeiten der W1-Wörter der n-Tupel zu einer Maßzahl verrechnet. Jedes Wörterbuch Wn 61 wird nach absteigenden Maßzahlen sortiert, so daß wieder die signifikantesten Wortgruppen am Anfang eines jeden Wörterbuches Wn stehen 54.

Für obiges Beispiel sieht das Wörterbuch W2 folgendermaßen aus:

| W2 | |
|---|---|
| COMMUNITY AFFAIRS | 37 |
| MANAGER COMMUNITY | 37 |
| POLLY OBRIEN | 23 |
| MIK0 SCHWARTZ | 15 |
| PAULA OBRIEN | 8 |

Das Wörterbuch W3 hat 3 Einträge, vorausgesetzt, daß der Name POLLY OBRIEN stets mit der Bezeichnung MANAGER COMMUNITY AFFAIRS kombiniert vorkommt und ein Zeilenumbruch in einem n-Tupel erlaubt ist.:

| W3 | |
|---|---|
| MANAGER COMMUNITY AFFAIRS | 37 |
| POLLY OBRIEN MANAGER | 23 |
| OBRIEN MANAGER COMMUNITY | 23 |

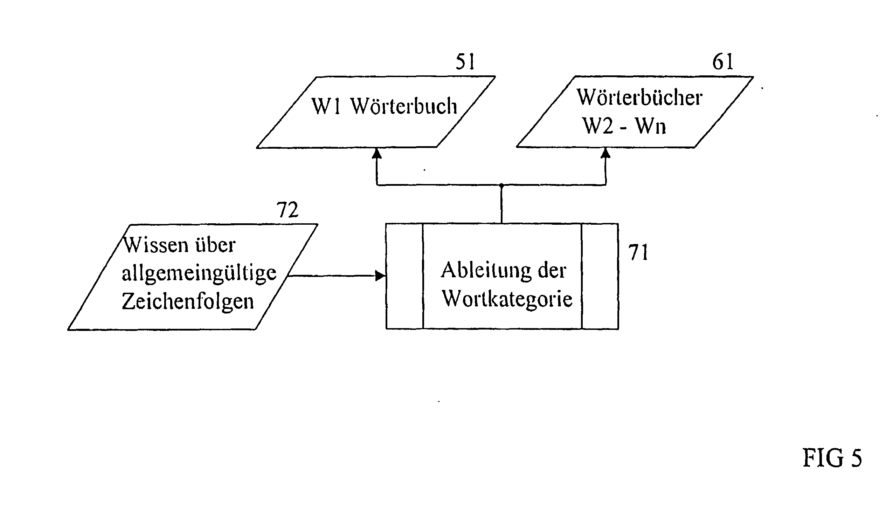

Wie beschrieben werden nun die Wortvorschläge der Wörterbücher Wn 61 (W2, W3, etc) entsprechend FIG 5 einem Operator zur Validierung vorgelegt. Durch Wissen über die zu erlernenden Worteinheiten 72 ist es an dieser Stelle möglich, Einträge in den Wörterbüchern W1, W2, .. Wn 51, 61 semantisch zu kategorisieren 71. So lassen sich in dieser Anwendung Einträge der semantischen Klasse <Name> zuordnen, indem in allgemeingültigen Vornamenslisten nachgeschlagen wird. Ähnliches gilt für die Semantikklasse <Abteilung>, die sich aus Schlüsselwörtern wie Department ableiten läßt.
Dieser Vorgang ist selbstverständlich auch automatisch ohne Operator durch Vergleich mit den Einträgen dieser Listen auszuführen.

Zu erfolgreich verteilten Sendungen sind die dazu erforderlichen Adreßelemente gefunden worden und sind als solche in den Erkennungsergebnissen gekennzeichnet. Wenn beispielsweise in der Anwendung der innerbetrieblichen Postverteilung Nachnamen und Vornamen erfolgreich gelesen worden sind, werden diese Ergebnisse in einer Statistik erfaßt; insbesondere wird die Häufigkeit der extrahierten Wörter, Paare, im allgemeinen von n-Tupeln, über definierte Zeitabschnitte td, z.B. für eine Woche, gespeichert, wobei die Sendungsart berücksichtigt werden kann. Als Ergebnis erhält man eine Verteilung der zu extrahierenden Adreßelemente für eine Folge von Zeitabschnitten:

| Zeitpunkt 1 | | |
|---|---|---|
| MELINDA DUCKSWORTH | 123 | |
| ALFRED SCHMID | | 67 |
| . . . | | |
| | | |

| Zeitpunkt 2 | | |
|---|---|---|
| MELINDA DUCKSWORTH | 1 | |
| ALFRED SCHMID | | 85 |
| . . . | | |
| | | |

| Zeitpunkt 3 | | |
|---|---|---|
| MELINDA DUCKSWORTH | 2 | |
| ALFRED SCHMID | | 72 |
| . . . | | |
| | | |

Aus der so ermittelten Verteilung läßt sich ableiten, ob Wörterbucheinträge gelöscht werden sollen: Die Einträge werden in eine Liste zum Entfernen aus dem Wörterbuch eingefügt, wenn deren Häufigkeit sich von tdᵢ zu tdᵢ₊₁ abrupt verringert und auf diesem Niveau in aufeinanderfolgenden Zeitabschnitten tdᵢ₊ₖ bleibt (z.B. k = 4). So wird im obigen Beispiel die Person MELINDA DUCKSWORTH im Wörterbuch gelöscht. Dieser Ablauf kann zusätzlich auch über einen Bestätigungsvorgang geführt werden.

## Patentansprüche

1. Verfahren zur Bildung und/oder Aktualisierung von Wörterbüchern zum automatischen Adresslesen,
**gekennzeichnet durch** die Schritte:
- Zwischenspeicherung der vom OCR-Leser erzielten Leseergebnisse der Adressen einer vereinbarten Anzahl von Sendungsbildern oder innerhalb einer vereinbarten Zeitspanne gelesener Sendungsbilder, unterteilt in eindeutig gelesene Ergebnisse mit einer Übereinstimmung mit einem Wörterbucheintrag und in zurückgewiesene Leseergebnisse ohne Übereinstimmung mit einem Wörterbucheintrag,
- Bildung von Klassen von Wörtern oder zusammengehörenden Wortgruppen mit dazugehörenden Repräsentanten der zwischengespeicherten und zurückgewiesenen Leseergebnisse, wobei die Wortgruppen aus n Adresswörtern, n= 1,2,...a, bestehen, zwischen denen sich jeweils m, m = 0,1,...b, weitere Wörter befinden, und wobei die Wörter der Klassen von Wörtern oder die Wörter der Klassen von Wortgruppen, bezogen auf jeweils einen bestimmten n- und m-Wert, untereinander ein bestimmtes Ähnlichkeitsmaß nicht unterschreiten,
- Aufnahme mindestens der Repräsentanten derjenigen Klassen, deren Häufigkeit einen festgelegten Wert überschreiten, in das oder die Wörterbücher der zugeordneten Adressbereiche.

2. Verfahren nach Anspruch 1, **dadurch gekenn-zeichnet, daß**
- zur Klassenbildung eine Häufigkeitsliste aller vorkommenden Wörter oder Wortgruppen der zurückgewiesenen Leseergebnisse, nach deren Häufigkeit sortiert, erstellt wird,
- zu jedem Wort oder jeder Wortgruppe, beginnend mit dem häufigsten Wort oder der häufigsten Wortgruppe, das Ähnlichkeitsmaß mit allen übrigen Wörtern oder Wortgruppen bestimmt und in eine Ähnlichkeitsliste eingetragen wird,
- alle Wörter oder Wortgruppen in der Ähnlichkeitsliste mit einem Ähnlichkeitsmaß über einer festgelegten Schwelle dem aktuellen Wort oder der aktuellen Wortgruppe als Klasse zugeordnet werden,
- anschließend die Wörter oder Wortgruppen der jeweils gebildeten Klasse aus der Häufigkeitsliste entfernt werden.

3. Verfahren nach Anspruch 1, **dadurch gekenn-zeichnet, daß**
der Repräsentant der jeweiligen Klasse von Wörtern oder Wortgruppen der zwischengespeicherten und zurückgewiesenen Leseergebnisse durch das/die kürzeste oder häufigste Wort oder Wortgruppe gebildet wird.

4. Verfahren nach Anspruch 1, **dadurch gekenn-zeichnet, daß**
die zeitliche Häufigkeit der Wörter oder Wortgruppen der eindeutig gelesenen Adressen statistisch dahingehend ausgewertet werden, daß bei deren plötzlicher und über einen festgelegten Zeitraum andauernder Verringerung über eine festgelegte Schwelle die jeweiligen eingetragenen Wörter oder Wortgruppen aus dem Wörterbuch entfernt werden.

5. Verfahren nach Anspruch 1, **dadurch gekenn-zeichnet, daß**
irrelevante Wörter der Leseergebnisse durch Vergleich mit in einer speziellen Datei gespeicherten Wörtern ermittelt und nicht in das Wörterbuch aufgenommen werden.

6. Verfahren nach Anspruch 1, **dadurch gekenn-zeichnet, daß**
kurze Wörter ohne Abkürzungspunkt mit weniger als p Buchstaben nicht in das Wörterbuch aufgenommen werden.

7. Verfahren nach Anspruch 1, **dadurch gekenn-zeichnet, daß**
in das Wörterbuch neben den Repräsentanten auch die Wörter und/oder Wortgruppen der dazugehörenden Klassen mit den Ähnlichkeitsmaßen und Häufigkeiten eingetragen werden.

8. Verfahren nach einem der Ansprüche 1 und 2, **dadurch gekennzeichnet, daß**
für Wörtergruppen mit n Wörtern, n>1, wobei die Wörter untereinander einen Abstand von m Wörtern, m>=0, haben, ausgehend vom jeweiligen, für das Wörterbuch ermittelten Einzelwort die Adressen mit Fenstern der Breite von n+m Wörtern durchsucht werden und beim Finden von weiteren n-1 für das Wörterbuch ermittelten Einzelwörtern in den festgelegten Abständen m untereinander diese gefundenen Wortgruppen mit deren Häufigkeiten in das entsprechende Wörterbuch übernommen werden.

9. Verfahren nach einem der Ansprüche 1,2,7,8, **dadurch gekennzeichnet, daß**
das Ähnlichkeitsmaß zwischen den Wörtern mit dem Levenshtein-Verfahren ermittelt wird.

10. Verfahren nach einem der Ansprüche 1 bis 9, **dadurch gekennzeichnet, daß**
die zu entfernenden Wörterbucheintragungen und die Neueintragungen ins Wörterbuch an einem Videocodierplatz angezeigt, kategorisiert und bestätigt werden.

11. Verfahren nach einem der Ansprüche 1 bis 9, **dadurch gekennzeichnet, daß**
die ins Wörterbuch einzutragenden Wörter und/oder Wortgruppen vor deren Eintragung mit den Inhalten einer Datei verglichen werden, in der für die jeweilige Wörterbuchkategorie charakteristische, allgemeingültige Namen oder wenigstens Zeichenstrings gespeichert sind, und bei Übereinstimmung in das entsprechende Wörterbuch übertragen werden.

## Claims

1. Method for forming and/or updating dictionaries for the automatic reading of addresses,
**characterized by** the following steps:
- temporary storage of the reading results, achieved by the OCR reader, of the addresses of an agreed number of images of items or of images of items read within an agreed period of time, subdivided into unambiguously read results with correspondence with a dictionary entry and into rejected reading results without correspondence with a dictionary entry,
- formation of classes of words or word groups, belonging together, with associated representatives of the temporarily stored and rejected reading results, where the word groups consist of n address words, n = 1, 2,...a, between which in each case m, m = 0, 1,...6, further words are located, and where the words in the classes of words or the words in the classes of word groups do not drop below a particular similarity factor referred to a particular n value and m value in each case,
- inclusion of at least the representatives of the classes whose frequency exceeds a predetermined value, into the dictionary or dictionaries of the associated address areas.

2. Method according to Claim 1, **characterized in that**
- for the purpose of forming classes, a frequency list of all words or word groups of the rejected reading results occurring is created, sorted in accordance with their frequency,
- for each word or each word group, beginning with the most frequent word or the most frequent word group, the factor of similarity with all remaining words or word groups is determined and entered in a similarity list,
- all words or word groups in the similarity list with a similarity factor above a predetermined threshold are allocated as a class to the current word or the current word group,
- subsequently the words or word groups of the class formed in each case are removed from the frequency list.

3. Method according to Claim 1, **characterized in that** the representative of the respective class of words or word groups of the reading results temporarily stored and rejected is formed by the shortest or most frequent word or word group.

4. Method according to Claim 1, **characterized in that** the temporal frequency of the words or word groups of the addresses read unambiguously is statistically analysed with the aim of removing the respective entered words or word groups from the dictionary in the case of their abrupt reduction, lasting over a predetermined period of time, over a predetermined threshold.

5. Method according to Claim 1, **characterized in that** irrelevant words of the reading results are determined by comparison with words stored in a special file and are not included in the dictionary.

6. Method according to Claim 1, **characterized in that** short words having fewer than p letters and without fullstop are not included in the dictionary.

7. Method according to Claim 1, **characterized in that** in addition to the representatives, the words and/or word groups of the associated classes with the similarity factors and frequencies are entered in the dictionary.

8. Method according to one of Claims 1 and 2, **characterized in that** for word groups having n words, n > 1, the words having a distance from one another of m words, m > = 0, the addresses are searched with windows having a width of n + m words starting with the respective single word determined for the dictionary and when further n-1 single words determined for the dictionary have been found in the predetermined gaps m between one another, these word groups found are included with their frequencies in the corresponding dictionary.

9. Method according to one of Claims 1, 2, 7, 8, **characterized in that** the factor of similarity between the words is determined by means of the Levenshtein method.

10. Method according to one of Claims 1 to 9, **characterized in that** the dictionary entries to be removed and the new entries in the dictionary are displayed, categorized and confirmed at a video coding station.

11. Method according to one of Claims 1 to 9, **characterized in that** the words and/or word groups to be entered into the dictionary, before they are entered, are compared with the contents of a file in which generally valid names characteristic of the respective dictionary category, or at least character strings, are stored and are transferred into the corresponding dictionary if they correspond.

## Revendications

1. Procédé de constitution et/ou d'actualisation de dictionnaires pour la lecture automatique d'adresses,
**caractérisé par** les étapes suivantes :
- mémorisation intermédiaire des résultats de lecture, obtenus par le lecteur OCR, des adresses d'un nombre convenu d'images d'envois ou des images d'envois lues pendant un intervalle de temps convenu, lesquels résultats sont divisés en des résultats lus sans équivoque avec une coïncidence avec un enregistrement de dictionnaire et en des résultats de lecture rejetés sans coïncidence avec un enregistrement de dictionnaire,
- formation de classes de mots ou de groupes de mots cohérents avec des représentants associés des résultats de lecture rejetés et mémorisés temporairement, les groupes de mots étant constitués de n mots d'adresse, n = 1, 2, ..., a, entre lesquels se trouvent à chaque fois m autres mots, m = 0, 1, ..., b, et les mots des classes de mots ou les mots de classes de groupes de mots, par rapport à chaque fois à une certaine valeur n et à une certaine valeur m, ne passant pas en dessous d'une certaine mesure de similitude entre eux,
- enregistrement au moins des représentants des classes dont la fréquence dépasse une valeur fixée dans le ou les dictionnaires des zones d'adresse associées.

2. Procédé selon la revendication 1, **caractérisé par le fait que**
- pour la formation de classes, on élabore une liste de fréquence de tous les mots ou groupes de mots occurrents des résultats de lecture rejetés, triés selon leur fréquence,
- pour chaque mot ou groupe de mots, en commençant par le mot ou groupe de mots le plus fréquent, on détermine la mesure de similitude avec tous les autres mots ou groupes de mots et on l'enregistre dans une liste de similitude,
- on associe tous les mots ou groupes de mots dans la liste de similitude au-dessus d'un seuil fixé au mot ou groupe de mots actuel en tant que classe,
- puis on élimine de la liste de fréquence les mots ou groupes de mots de la classe respectivement formée.

3. Procédé selon la revendication 1, **caractérisé par le fait que** le représentant de la classe respective de mots ou de groupes de mots des résultats de lecture rejetés et mémorisés temporairement est formé par le mot ou groupe de mots le plus court ou le plus fréquent.

4. Procédé selon la revendication 1, **caractérisé par le fait qu'**on évalue statistiquement la fréquence temporelle des mots ou groupes de mots des adresses lues sans équivoque de telle sorte que, lorsque cette fréquence diminue brusquement et durant un intervalle de temps fixé au-delà d'un seuil fixé, on élimine du dictionnaire les mots ou groupes de mots enregistrés respectifs.

5. Procédé selon la revendication 1, **caractérisé par le fait qu'**on détermine des mots insignifiants des résultats de mesure par comparaison avec des mots mémorisés dans un fichier spécial et on ne les enregistre pas dans le dictionnaire.

6. Procédé selon la revendication 1, **caractérisé par le fait qu'**on n'enregistre pas dans le dictionnaire des mots courts et sans point d'abréviation ayant moins de p lettres.

7. Procédé selon la revendication 1, **caractérisé par le fait qu'**on enregistre dans le dictionnaire, outre les représentants, les mots et/ou groupes de mots des classes associées avec les mesures de similitude et avec les fréquences.

8. Procédé selon l'une des revendications 1 et 2, **caractérisé par le fait que**, pour des groupes de mots comportant n mots, n > 1, ces mots ayant entre eux une distance de m mots, m ≥ 0, on examine à partir du mot isolé respectif déterminé pour le dictionnaire les adresses avec des fenêtres de n + m mots de largeur et, lorsqu'on trouve n - 1 autres mots isolés déterminés pour le dictionnaire avec les distances fixées m entre eux, on enregistre ces groupes de mots trouvés avec leurs fréquences dans le dictionnaire correspondant.

9. Procédé selon l'une des revendications 1, 2, 7, 8, **caractérisé par le fait qu'**on détermine la mesure de similitude entre les mots avec le procédé de Levenshtein.

10. Procédé selon l'une des revendications 1 à 9, **caractérisé par le fait que**, sur un poste de codage vidéo, on affiche les enregistrements de dictionnaire à éliminer et les nouveaux enregistrements dans le dictionnaire, on les range en catégories et on les confirme.

11. Procédé selon l'une des revendications 1 à 9, **caractérisé par le fait que**, avant leur enregistrement, on compare les mots et/ou groupes de mots à enregistrer dans le dictionnaire aux contenus d'un fichier dans lequel sont mémorisés des noms ou au moins des chaînes de caractères généraux caractéristiques de la catégorie de dictionnaire respective et, en cas de coïncidence, on les transmet dans le dictionnaire correspondant.
